# EUROPÄISCHE PATENTSCHRIFT

(11) **EP 0 417 800 B1**
(45) Veröffentlichungstag und Bekanntmachung des Hinweises auf die Patenterteilung: **21.02.1996**
(21) Anmeldenummer: 90117686.7
(22) Anmeldetag: 13.09.1990
(51) Int. Cl.: F16P 3/00, A47J 42/56, G05B 9/02, H03K 17/292

(54) **Elektronische Sicherheitsschaltung für ein motorbetriebenes Haushaltsgerät**
Electronic safety circuit for a househould appliance driven by an electric motor
Circuit électronique de sûreté pour un appareil électroménager commandé par un moteur électrique

(30) Priorität: 15.09.1989 DE 3930885
(43) Veröffentlichungstag der Anmeldung: 20.03.1991
(73) Patentinhaber: Braun Aktiengesellschaft, Frankfurt am Main (DE)
(72) Erfinder: Rebordosa Ruis, Antonio, E-08240 Manresa (Barcelona) (ES); Figuls, Oliva Jaume, E-08028 Barcelona (ES); Millan, Antolino Jose, E-08028 Barcelona (ES)

(56) Entgegenhaltungen:
- EP-A- 0 120 496
- EP-A- 0 129 222
- DE-A- 2 817 517
- DE-A- 3 540 370

## Beschreibung

Die Erfindung betrifft eine Sicherheitsschaltung für eine Küchenmaschine nach dem Oberbegriff des Patentanspruchs 1.

Aus dem Produktprogramm mit Messeneuheiten von 1984 der Firma Moulinex ist insbesondere auf Seite 17 eine als Saftzentrifuge arbeitende Küchenmaschine (Artikel-Nr. 753) bekannt, die eine in der EP-A-129 222 beschriebene Sicherheitseinrichtung aufweist und bei der zum Entnehmen und Säubern des Zentrifugensiebes der Deckel nur dann vom Sockel der Maschine abgenommen werden kann, wenn vorher zwei am Sockel schwenkbar gelagerte und am Deckel an gegenüberliegenden Stellen angreifende Verriegelungshaken gelöst werden. Der einem Schieber des Hauptschalters benachbarte Verriegelungshaken wird bei seinem Lösen vom Gehäuse weggeschwenkt, so daß ein mit dem Verriegelungshaken in Eingriff stehendes Übertragungsglied freigegeben wird und aus dem Wirkungsbereich des Hauptschalters und des den Hauptschalter ein- bzw. ausschaltenden Schiebers schwenkt, so daß der Schieber den Hauptschalter nicht mehr in seiner Einschaltstellung hält. Der Schieber fällt dadurch selbsttätig in seine Ausschalt-Stellung, so daß dann, wenn der Verriegelungshaken wieder in seine den Deckel verschließende Lage gebracht wird, der Schieber ebenfalls wieder in seine Einschalt-Stellung gebracht werden muß, damit das dabei wiederum betätigte Übertragungsglied sich im Übertragungsweg vom Schieber zum Hauptschalter befindet, da nur auf diese Weise der Hauptschalter wieder in seine Einschaltstellung gebracht werden kann.

Bei dieser Saftzentrifuge ist es als weniger vorteilhaft anzusehen, daß nur der dem Schieber benachbarte Verriegelungshaken auf den Schieber mechanisch einwirkt, während der gegenüberliegende Verriegelungshaken keinen Einfluß auf den Hauptschalter hat, so daß dann, wenn nur dieser Verriegelungshaken gelöst wird, während der andere seine ordnungsgemäße Schließstellung beibehält, der Elektromotor dennoch an- bzw. weiterläuft. In dieser teilweise geöffneten Stellung des Deckels kann dieser soweit um den anderen, den Deckel ordnungsgemäß verschließenden Verriegelungshaken gedreht werden, daß eine Hand einer Bedienungsperson dennoch in den Wirkungsbereich des mit sehr hoher Drehzahl rotierenden Zentriefugensiebes gelangen kann, so daß Verletzungen nicht ausgeschlossen sind. Des weiteren handelt es sich hierbei um eine mechanische Sicherheitsverriegelung die nicht nur aufwendig sondern aufgrund ihrer höheren Zahl von Bauteilen auch teuer ist.

Weiterhin ist aus der EP-A-120 496 eine Sicherheitsschaltung für ein mehrteiliges und elektromotorisch betriebenes Gerät bekannt, bei der elektrisch in Reihe zum Hauptschalter ein als Reed-Schalter ausgebildeter Sicherheitsschalter vorhanden ist, der nur dann in seine Einschaltstellung gelangt, wenn der Deckel ordnungsgemäß auf dem Behälter und der Behälter samt Deckel ordnungsgemäß auf dem Gerätesockel positioniert ist; das heißt, bei eingeschaltetem Hauptschalter kann die Steuerung des Antriebsmotors alleine durch Aufsetzen bzw. Abnehmen des Deckels oder des Behälters samt dem ihn verschließenden Deckel auf den Gerätesockel gesteuert werden. Ein Hauptschalter wäre also demnach gar nicht erforderlich, da die Steuerung des Antriebsmotors alleine durch die beschriebenen Maßnahmen durchgeführt werden kann. Bei den heutigen Sicherheitsanforderungen an Küchenmaschinen wäre es aber wünschenswert, daß der Elektromotor ausschlieblich über den Hauptschalter in Gang gesetzt werden kann.

Aus der DE-A 2 817 517 ist eine Küchenmaschine bekannt, bei der zwei mit dem Elektromotor in Reihe Liegende Schalter eine Sicherheitsschaltung darstellen, wobei die Küchenmaschine erst dann anlauft, wenn beide Schalter ihre Einschaltstellung eingenommen haben.

Aus der EP-A-0 120 496 ist weiterhin eine Küchenmaschine nach dem Oberbegriff des Anspruchs 1 bekannt, bei der einerseits der Elektromotor nur dann in Betrieb genommen werden kann, wenn sich der Sicherheitsschalter in seiner Einschaltstellung befindet, bevor der Hauptschalter von seiner Ausschaltstellung in seine Einschaltstellung gebracht wird. Andererseits kann die Küchenmaschine, wenn sie durch Ausschalten des Sicherheitsschalters außer Betrieb gesetzt wird, nur dann wieder in Betrieb gesetzt werden, wenn sowohl der Sicherheitsschalter in seine Einschaltstellung zurückgebracht als auch der Hauptschalter zuerst aus seiner Einschaltstellung in seine Ausschaltstellung und dann wieder zurück in seine Einschaltstellung bewegt wird. Durch diese Abfolge wird eine Bedienungsperson dazu gezwungen, daß sie, wenn sie irrtümlicherweise den Sicherheitsschalter in seine Ausschaltstellung bringt, bevor sie den Hauptschalter in seine Ausschaltstellung gebracht hat, letzteren nun zuerst in die Ausschaltstellung bringen muß, bevor sie durch Einschalten des Hauptschalters den Elektromotor wieder in Betrieb setzen kann.

Die Tatsache, daß bei dieser Sicherheitsschaltung nach einer, durch einen oder mehrere Sicherheitsschalter verursachten Unterbrechung der Spannungsversorgung des Elektromotors auch nach dem lagerichtigen Aufsetzen aller lösbaren Bauteile auf die Küchenmaschine vor einer erneuten Inbetriebnahme des Elektromotors zuerst der Hauptschalter ausgeschaltet werden muß, bringt weitere Vorteile in Bezug auf die Sicherheit der Küchenmaschine. Dem Benutzer wird nämlich durch die zwangsläufige Abfolge "Ausschalten" des Hauptschalters, "Einschalten" des Hautpschalters ein deutlicher Hinweis darauf gegeben, daß die Außerbetriebsetzung der Küchenmaschine durch den oder die Sicherheitschalter aus Gründen einer unsicheren Handhabung erfolgt ist. Demzufolge wird der Benutzer in Zunkunft danach trachten, derartige Betriebszustände zu vermeiden.

Aufgabe der Erfindung ist es daher, eine Sicherheitseinrichtung für eine Küchenmaschine mit einfachen Mitteln zu schaffen, bei der bei eingeschaltetem Hauptschalter ein Anlauf des Antriebsmotors durch Manipulationen einer Bedienungsperson an dem Sicherheitsschalter nicht ermöglicht wird.

Diese Aufgabe wird erfindungsgemäß durch die Merkmale des kennzeichnenden Teils des Patentanspruchs 1 gelöst.

Die elektrische Ausführungsform der Erfindung nach Anspruch 1 weist den Vorteil auf, daß sie auf einer äußerst einfachen Schaltung beruht, zu derer Realisierung im wesentlichen nur ein einziges, weiteres elektrisches Bauteil, nämlich ein elektomagnetisches Relais, benötigt wird. Aus diesem Grund ist die entsprechende Schaltung zum einen wenig störanfällig. Zum anderen können Küchenmaschinen ohne eine derartige Sicherheitschaltung einfach und daher relativ billig mit einer solchen nachgerüstet werden.

Die elektronische Ausführungsform der Sicherheitsschaltung nach der Erfindung gemäß Anspruch 2 besteht aus einer Schaltstufe mit einem Halbleiterschalter und einer Steuerstufe. Die Steuerstufe führt der Schaltstufe ein Steuersignal zu, das das Durchschalten der Schaltstufe nach Öffnen des durch den Deckel betätigten Sicherheitsschalters bis zum Unterbrechen der Stromversorgung des Gerätes unterbindet. Durch das Verwenden eines Halbleiterschalters und der zugehörigen Steuerstufe kommt die elektronische Sicherheitsschaltung ohne elektromagnetisches Relais aus, und es ergibt sich trotz des größeren Bauteileaufwandes ein günstigerer Herstellungspreis.

Ein weiterer Vorteil der Erfindung besteht darin, daß es dem Benutzer erschwert wird, bei nicht aufgesetzen lösbaren Bauteilen gleichzeitig Manipulationen vorzunehmen, um einen Sicherheitsschalter zu schließen und mit der anderen Hand den Hauptschalter aus- und einzuschalten. Für den Fall, daß mehr als ein Sicherheitsschalter vorhanden ist, ist eine Inbetriebnahme der Küchenmaschine durch Vornahme entsprechender Manipulationen nahezu unmöglich, da der Benutzer keine Hand mehr frei hat, um den Hauptschalter zu bedienen.

Gemäß einer Weiterbildung besteht der Halbleiterschalter aus einem Thyristor, der über positive Versorgungs-Halbwellen betrieben wird. Damit ersetzt der Thyristor in vorteilhafter Weise im Zusammenwirken mit der Schaltstufe ein elektromagnetische Relais, das Schaltkontakte aufweist, die bei längerem Betrieb störanfällig sind.

Nach einer anderen Weiterbildung besteht die Steuerstufe aus einem Schalttrunsistor und einem ersten Zeitglied, das an den Basiszweig des Schalttransistors angeschlossen ist. Mittels des Zeitgliedes wird der Schalttransistor gegenüber dem Thyristor zeitlich verzögert durchgeschaltet. Damit stellt das Zeitglied sicher, daß der Motor vor dem Ansprechen des Schalttransistors in Betrieb gesetzt wird. Nach dem Durchschalten des Thyristors kann die Funktion des Schalttransistors bzw. Steuerstufe keinen Einfluß mehr auf den Betrieb des Motors ausüben. Dieser Schaltzustand bleibt solange erhalten, bis der oder die Sicherheitsschalter betätigt wurden. Erst anschließend unterbindet die Steuerstufe das erneute Zünden des Thyristors. Die Steuerstufe wird durch eine Rücksetztaste außer Funktion gesetzt, die in vorteilhafter Weise der Netzschalter des Gerätes ist.

Gegenüber der Verwendung eines elektromagnetischen Relais ergibt sich bei einer elektronischen Sicherheitsschaltung der Vorteil, daß die Schaltstufe auch mit einer Drehzahlregelung für den Motor kombinierbar ist. Bei Verwenden eines Thyristors usw. als Halbleiterschalter lassen sich so in einfacher Weise zusätzlich Phasenanschnittssteuerungen in die Betriebsfunktion integrieren.

Zusätzliche vorteilhafte Weiterbildungen der Erfindung lassen sich weiteren Unteransprüchen entnehmen.

Nachfolgend werden zwei Ausführungsformen der Erfindung anhand der Zeichnung näher beschrieben. Es zeigen:
- Fig. 1a: ein Blockdiagramm einer elektrischen Sicherheitsschaltung nach der Erfindung
- Fig. 1b: ein Blockdiagramm einer elektronischen Sicherheitsschaltung nach der Erfindung,
- Fig. 2: eine bevorzugte Ausführungsform der elektronischen Sicherheitsschaltung nach Fig. 1b und
- Fig. 3: ein Signaldiagramm zum Erläutern der Funktionsweise der elektronischen Sicherheitsschaltung nach den Fig. 1b und 2.

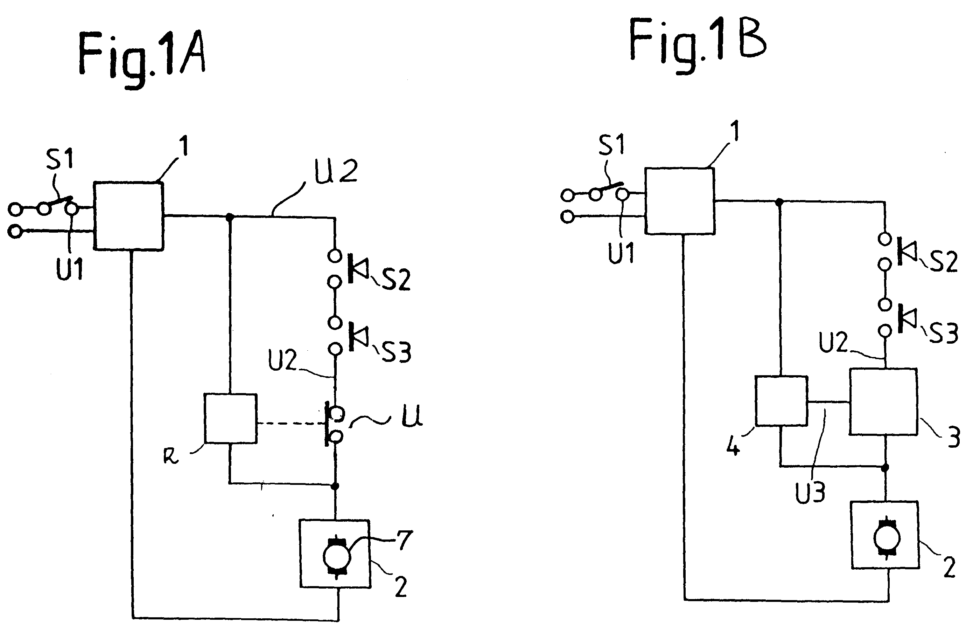

Nach dem Blockdiagramm gemäß Fig. 1a wird eine Stromversorgungseinheit 1 durch Schließen eines Hauptschalters S1, der den Schalter zum Ein- und Ausschalten einer nicht dargestellten Küchenmaschine bildet, mit der Netzspannung U1 verbunden. Die Stromversorgungseinheit 1 kann entweder im wesentlichen einen Transformator enthalten, der die Netzspannung U1 auf die für die Versorgung einer Elektromotorstufe 2, deren wichtigster Baustein ein Elektromotor 7 ist, benötigte Wechselspannung U2 transformiert. Die Stromversorgungseinheit 1 kann aber auch einen Gleichrichter enthalten, so daß unter der Spannung U2 in Fig. 1a auch eine für ein Gleichstrommotor 7 geeignete Gleichspannung verstanden werden kann.

Die Motorstufe 2 ist mit einem Pol der Spannungsversorgungseinheit 1 direkt verbunden. Mit deren anderen Pol ist die Motorstufe 2 über eine Parallelschaltung aus einem elektromagnetischen Relais R und einer Anordnung aus zwei sogenannten Sicherheitsschaltern S2, S3 und einem Unterbrecher U verbunden. Die beiden Sicherheitsschalter S2 und S3 sind beide einfache elektrische Schalter, die in ihrem Grundzustand beide offen sind. Sie werden beide geschlossen, wenn lösbare Bauteile der Küchenmaschine, beispielsweise die beiden den Deckel eines Entsafters verschließenden Bügel, lagerichtig auf dem Grundkörper der Küchenmaschine befestigt sind. Die lagerichtige Befestigung lösbarer Bauteile auf dem Grundkörper der Küchenmaschine entspricht gleichzeitig dem Zustand der Küchenmaschine, in dem der Benutzer bei deren Inbetriebnahme vor Verletzungen geschützt ist.

Der Unterbrecher U, der ebenfalls als einfacher elektrischer Schalter wirkt und der in seinem Grundzustand geschlossen ist, wird dann geöffnet, wenn das Relais R aktiviert wird. Diese Wirkungsweise wird in Fig. la durch die gestrichelte Linie zwischen Relais R und Unterbrecher U symbolisiert.

Die Wirkungsweise der in Fig. 1a dargestellten Schaltung wird nachstehend beschrieben:

Unter der Voraussetzung, daß beide Sicherheitsschalter S2, S3 geschlossen sind, das heißt die lösbaren Bauteile der Küchenmaschine sind lagerichtig angeordnet, wird nach dem Schließen des Hauptschalters S1 der Elektromotor 7 in Betrieb gesetzt, da die Anordnung aus Sicherheitsschalter S2, S3 und Unterbrecher U das Relais R überbrückt, weil dessen Impedanz erheblich über dem "Kurzschlußwiderstand" der genannten Anordnung liegt. Das Relais R ist in diesem Betriebszustand also nicht aktiviert, so daß der Unterbrecher U geschlossen bleibt.

Werden nun einer oder beide Sicherheitsschalter S2, S3 dadurch geöffnet, daß der Benutzer während des Betriebs der Küchenmaschine ein lösbares Bauteil von dieser entfernt, wird die parallel zum Relais R geschaltete Anordnung elektrisch unterbrochen, was zur Folge hat, daß das Relais R nicht mehr durch die Anordnung überbrückt wird sondern elektrisch in Reihe mit dem Elektromotor 7 liegt. Dabei ist die Impedanz des Relais R so gewählt, daß am Elektromotor 7 keine ausreichende Spannung mehr anliegt, um diesen in Betrieb zu halten. Das Relais R wird dagegen ausreichend mit Spannung versorgt, so daß es den Unterbrecher U in seiner offenen Stellung halten kann.

Werden nun die Sicherheitsschalter S2, S3 entweder durch lagerichtiges Aufsetzen der lösbaren Bauteile der Küchenmaschine oder durch Manipulationen des Benutzers wieder geschlossen, läuft der Elektromotor 7 dennoch nicht an, da der geöffnete Unterbrecher U die Überbrückung des Relais R verhindert. Der Benutzer muß zuerst den Hauptschalter S1 öffnen, wodurch das Relais R deaktiviert wird und der Unterbrecher U in seine geschlossene Stellung zurückkehrt. Auf diese Weise führen zum einen Manipulationen an den Sicherheitsschaltern S2, S3 niemals zur Wiederinbetriebnahme des Elektromotors 7. Zum anderen muß der Benutzer auch nach lagerichtigem Wiederaufsetzen der lösbaren Bauteile ganz bewußt den Hauptschalter S1 aus- und einschalten, um den Elektromotor 7 wieder in Betrieb nehmen zu können. Durch die beschriebene Sicherheitsschaltung wird die Sicherheit von Küchenmaschinen entscheident verbessert.

Fig. 1b zeigt ein Blockdiagramm einer elektronischen Sicherheitsschaltung, die mit Netzspannung U1 betrieben wird. Dabei wird wiederum die Netzspannung U1 über einen Hauptschalter S1 einer Stromversorgungseinheit 1 zugeführt. Die Stromversorgungseinheit 1 setzt bei diesem Ausführungsbeispiel der Erfindung die Netzspannung U1 in eine gleichgerichtete Versorgungsspannung U2 für die nachgeschalteten Stufen um. Die Versorgungsspannung U2 gelangt wiederum über zwei Sicherheitsschalter S2, S3 zu einer Schaltstufe 3 und einer Motorstufe 2, die hintereinander in Reihe angeordnet sind. Die Schaltstufe 3 weist einen Halbleiterschalter auf, und der Betrieb der Motorstufe 2 ist nicht möglich, wenn der Halbleiterschalter oder die Sicherheitsschalter S2, S3 geöffnet sind. Die Sicherheitsschalter S2, S3 werden beispielsweise beim Öffnen des Deckels der Küchenmaschine geöffnet. Bei dem Haushaltsgerät kann es sich beispielsweise um einen Mixer oder Entsafter, eine Zitruspresse oder dergleichen handeln. Aus Sicherheitsgründen sind häufig zwei Sicherheitsschalter S2, S3 vorgeschrieben.

Die Schaltstufe 3 ist über eine Steuerleitung mit einer Steuerstufe 4 verbunden, der gleichfalls die Versorgungsspannung U2 zugeführt wird. Über die Steuerleitung detektiert die Steuerstufe 4 den Betriebszustand der Schaltstufe 3 bzw. der Sicherheitsschalter S2, S3. Detektiert die Steuerstufe 4, daß die Sicherheitsschalter S2, S3 geöffnet wurden, unterbindet die Steuerstufe 4 den weiteren Betrieb der Motorstufe 2 über die Schaltstufe 3. D.h., der Nichtbetrieb der Schaltstufe 3 wird durch die Steuerstufe 4 blockiert. Der Nichtbetriebszustand der Schaltstufe 3 wird solange aufrechtgehalten, bis die Steuerstufe 4 das Unterbrechen der Stromversorgung mittels des Schalters S1 detektiert. Das Unterbrechen der Stromversorgung detektiert die Steuerstufe 4 durch den Anschluß an die Versorgungsspannung U2. Durch das Unterbrechen der Stromversorgung wird die Steuerstufe 4 in den nicht aktiven Betriebszustand zurückgesetzt.

In anderen Ausführungsformen kann das Rücksetzen der Steuerstufe 4 auch durch eine zusätzliche Rücksetztaste erfolgen, die an der Steuerstufe 4 direkt angreift und nur auf deren Funktion einwirkt. Beispielsweise kann die Rücksetztaste in der Versorgungsleitung ausgebildet sein, die die Versorgungsspannung U2 mit der Steuerstufe 4 verbindet.

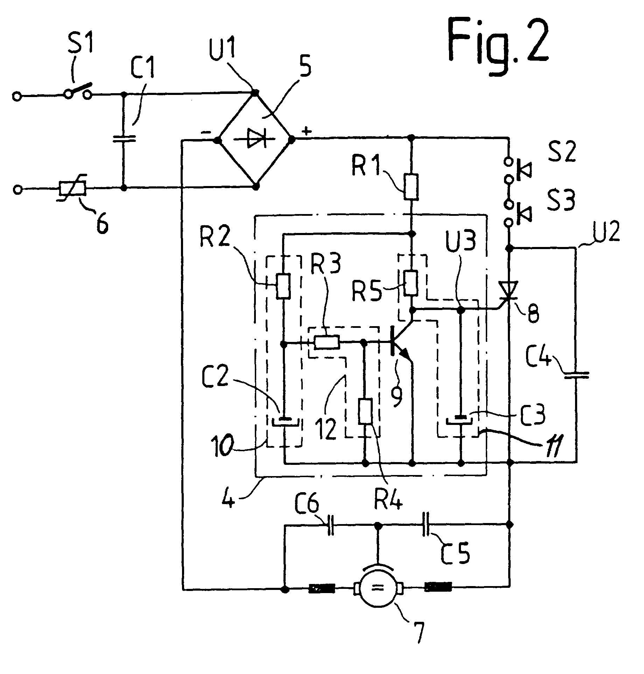

Fig. 2 zeigt eine bevorzugte Ausführungsform der elektronischen Sicherheitsschaltung. Die Stromversorgungseinheit 1 in Fig. 1A besteht in Fig. 2 aus einer Vollweg-Gleichrichterbrücke 5, einem PCT-Widerstand 6 und einem Kondensator C1. Die positive Versorgungsspannung U2 wird von der Gleichrichterbrücke 5 über die beiden Sicherheitsschalter S2, S3 einem Thyristor 8 als Halbleiterschalter und der in Reihe nachgeschalteten Motorstufe 2 zugeführt. Die Motorstufe 2 weist einen Motor 7 sowie Entstörkondensator C5, C6 auf. Parallel zu der Anode und Kathode des Thryristors 8 ist ein Kondensator C4 geschaltet, der als Überspannungsschutz gegen die Spannungen dient, die die Induktivitäten des Motors 7 beim Ein- und Ausschalten hervorrufen.

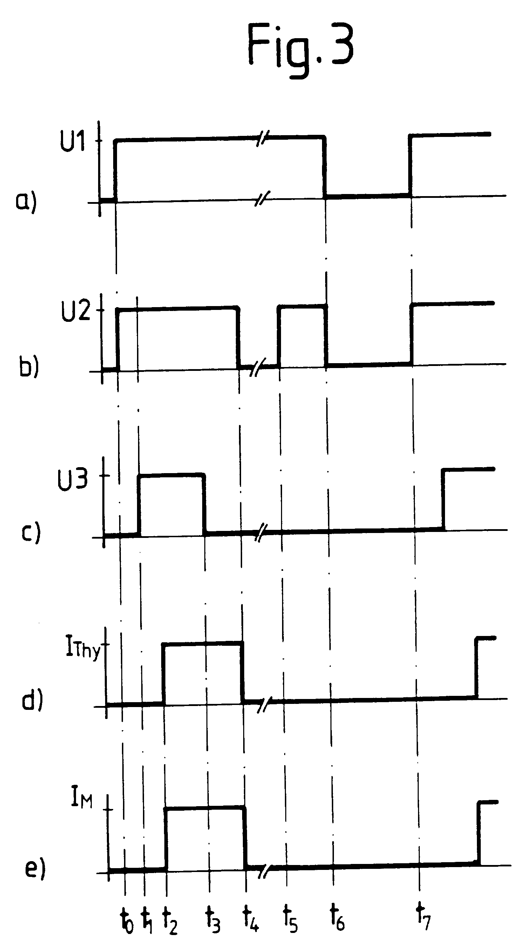

Der Steueranschluß des Thyristors 8 ist über Widerstände R1, R5 gleichfalls mit der Versorgungsspannung U2 verbunden. Zusätzlich ist zwischen dem Steueranschluß und der Kathode des Thyristors 8 ein Kondensator C3 vorgesehen. Der Kondensator C3 bildet zusammen mit dem Widerstand R5 ein Zeitglied 11, das nachfolgend als zweites Zeitglied bezeichnet wird. Das zweite Zeitglied 11 bewirkt, daß der Thyristor 8 nach Betätigung des Hauptschalters S1 zeitlich etwas verzögert gezündet wird. Zur weiteren Beschreibung der Schaltung wird gleichzeitig auf Fig. 3 Bezug genommen, die mittels Signaldiagrammen den Zeitablauf und die Funktionsweise der elektronischen Schaltung erläutert.

Wird der Hauptschalter S1 zum Zeitpunkt t0 geschlossen, wird die Netzspannung U1 zugeführt (Fig. 3). Wenn gleichzeitig die beiden Sicherheitsschalter S2, S3 geschlossen sind (Fig. 3b), wird dem Steueranschluß des Thyristors 8 etwas zeitverzögert zum Zeitpunkt t1 die Steuerspannung U3 (Fig. 3c) nach einer e-Funktion (nicht dargestellt) zugeführt. Aufgrund des zeitverzögerten Anstiegs der Steuerspannung U3 zündet der Thyristor 8 zum Zeitpunkt t2 (Fig. 3d - entspricht Stromfluß durch Thyristor). Das zweite Zeitglied 11 bewirkt, daß der Thyristor 8 nicht sofort mit dem Einschalten des Hauptschalters S1 den motor 7 mit Strom versorgt. Hierdurch ergibt sich ein sanfterer und prellfreier Anlauf des Motor 7. Zum weiteren Verständnis der Funktionsweise der Schaltung wird darauf hingewiesen, daß der einmal durchgeschaltete Thyristor 8 unabhängig von der weiter zugeführten Steuerspannung U3 im durchgeschalteten Zustand verbleibt. Der durchgeschaltete Zustand wird auch weiter aufrechtgehalten, wenn die Steuerspannung U3 gegenüber der Kathode auf 0 abfällt. Weiter kommt dem Kondensator C4 neben dem Überspannungsschutz die Funktion eines Siebkondensators zu, der den Stromfluß durch den Thyristor 8 auch dann weiter aufrechthält, wenn die von der Vollweggleichrichterbrücke 5 im 100 Hz-Rythmus zugeführten Halbwellenimpulse in ihrer Spannungshöhe auf 0 gehen.

Aufgrund des Kondensators C4 kann der Stromfluß durch den gezündeten Thyristor 8 nur durch Öffnen einer der beiden Sicherheitsschalter S2, S3 unterbrochen werden. In Fig. 3 ist dies zum Zeitpunkt t3 dargestellt. Damit wird der Stromfluß (Fig. 3e) durch den Thyristor 8 unterbrochen. Mit dem Schließen des Hauptschalters S1 wird gleichzeitig der Steuerstufe 4 aus Fig. 1B die Versorgungsspannung U2 über den Widerstand R1 zugeführt. Die Steuerstufe 4 weist einen Transistor 9 auf, dessen Kollektorwiderstand gleichzeitig den Widerstand R5 des zweiten Zeitgliedes 11 bildet. D.h., der Steueranschluß des Thyristors 8 ist an den Kollektor des NPN-Transistors 9 angeschlossen. Der Widerstand R1 wirkt hauptsächlich als Spannungsteiler, um die Versorgungsspannung für die Steuerelektrode des Thyristors 8 und die Steuerstufe 4 gegenüber der Versorgungsspannung 2 abzusenken. Die reduzierte Versorgungsspannung gelangt über einen Widerstand R2 und einen weiteren Widerstand R3 zur Basis des Transistors 9. Der Emitter des Transistors 9 ist an die Kathode des Thyristors 8 bzw. an den Motoranschluß und nicht direkt an den Minusanschluß des Gleichrichters 5 angeschlossen. Hierdurch wirkt gleichzeitig der innere ohmsche Widerstand des Motors 7 als Spannungsteiler zum Reduzieren der Versorgungsspannung für die Steuerstufe 4.

Der Transistor 9 der soweit beschriebenen Steuerstufe 4 würde sofort mit Einschalten des Hauptschalters S1 zum Zeitpunkt t0 durchschalten. Damit würde der Steueranschluß des Thyristors 8 über die Kollektor-Emitterstrecke des Transistors 9 augenblicklich an die Kathode des Thyristors 8 gelegt. Ein Durchschalten des Thyristors 8 wäre dann nicht mehr sichergetellt. Deshalb ist ein weiteres Zeitglied 10 vorgesehen, das aus dem Widerstand R2 und einem Kondensator C2 gebildet wird. Das Zeitglied 10 (im nachfolgenden als erstes Zeitglied bezeichnet) besitzt eine größere Zeitkonstante als das zweite Zeitglied 11, das zuvor beschrieben wurde. Das erste Zeitglied 10 besitzt beispielsweise eine Zeitkonstante von 150 ms (T = R2 x C2) und das zweite Zeitglied 11 eine Zeitkonstante von 50 ms (T = R5 x C3). Die unterschiedlichen Zeitkonstanten bewirken, daß der Thyristor 8 sicher vor dem Transistor 9 durchschaltet. Hat der Thyristor 8 durchgeschaltet, kann die Höhe der Steuerspannung U3 keinen Einfluß mehr auf den Betriebszustand des Thyristors 8 nehmen. Der Thyristor 8 bleibt weiterhin gezündet, auch wenn der Transistor 9 aufgrund des ersten Zeitgliedes 10 die Steuerspannung U3 zum Zeitpunkt t3 auf das Potential der Thyristorkathode bringt. Folglich hat die Steuerstufe 4 auf den gezündeten Zustand des Thyristors 8 keinen Einfluß mehr.

Wie in Fig. 3 dargestellt, kann der Stromfluß durch den Motor bzw. durch den gezündeten Thyristor 8 zum Zeitpunkt t4 nur durch Öffnen der Sicherheitsschalter S2, S3 unterbrochen werden. Das Öffnen der Sicherheitsschalter S2, S3 hat auf den durchgeschaltenen Zustand des Transistors 9 keinen Einfluß, weshalb die Steuerspannung U3 weiterhin auf Thyristorkathodenpotential verbleibt. Ein erneutes Schließen der Sicherheitsschalter S2, S3 zum Zeitpunkt t5 kann kein erneutes Zünden des Thyristors 8 bewirken, weil die Steuerspannung U3 weiterhin unterhalb der Zündschwelle liegt. Um den durchgeschalteten Zustand des Transistors 9 aufzuheben, muß beispielsweise die Emitterleitung durch eine Rücksetztaste (nicht dargestellt) unterbrochen werden. Die Emitterleitung muß solange unterbrochen bleiben, bis der Thyristor 8 über den Widerstandszweig R1, R5 und aufgrund der Zeitverzögerung durch den Kondensator C3 das Zündspannungspotential erreicht. Es kann aber auch auf die Rücksetztaste verzichtet werden, wenn der Hauptschalter S1 betätigt wird. Wird der Hauptschalter S1 zum Zeitpunkt t6 betätigt und kurzfristig unterbrochen, entlädt sich der Kondensator C2 des ersten Zeitgliedes 10 sicher über einen als Entlade kreis 12 dienenden Widerstandszweig R3, R4. Hierzu ist der Widerstand R4 zwischen Basis und Emitter des Transistors 9 geschaltet. Im Emitterzweig des Transistors 9 ist kein Widerstand angeordnet, weshalb zusätzlich die Entladung des Kondensators C2 über die Basisemitterstrecke erfolgen kann. Wird der Hauptschalter S1 zum Zeitpunkt t7 wieder geschlossen, befindet sich die gesamte Schaltung wieder in dem zum Zeitpunkt t0 beschriebenen Zustand, und der Thyristor 8 kann zeitlich bevorzugt gegenüber dem Transistor 9 durchschalten. Ab dem Zeitpunkt t7 in Fig. 3 ergibt sich wiederum der Funktionsablauf, der ab t0 bereits beschrieben wurde.

In vorteilhafter Weise läßt sich die beschriebene elektronische Sicherheitsschaltung auch mit einer Phasenanschnittssteuerung (nicht dargestellt) zur Motordrehzahl regelung kombinieren.

## Patentansprüche

1. Sicherheitsschaltung für eine aus mehreren, lösbar miteinander verbundenen Bauteilen bestehende und durch einen Elektromotor (7) angetriebene Küchenmaschine, welche neben einem Hauptschalter (S1) zu ihrer Inbetriebnahme einen oder mehrere elektrisch in Reihe geschaltete Sicherheitsschalter (S2, S3) aufweist, die nur dann, wenn alle Bauteile sich in ihrer die Sicherheit des Benutzers gewährleistenden, ordnungsgemäßen Lage befinden, es ermöglichen, daß der Elektromotor (7) bei geschlossenem Hauptschalter (S1) an seiner Spannungsversorgung liegt und daher in Betrieb ist, wobei
auf elektrische oder elektronische Weise betätigte Mittel (R, 8) vorhanden sind, die dafür sorgen, daß dann, wenn bei sich in Betrieb befindlichem Elektromotor (7) dessen Spannungsversorgung (U2) nach Entfernung eines der Bauteile des Haushaltsgeräts aus seiner ordnungsgemäßen Lage unterbrochen wird, ein Wiederanlauf des Elektromotors (7) nur dadurch erreichbar ist, daß vom Benutzer zuerst zum einen sämtliche Bauteile der Küchenmaschine wieder in ihre ordnungsgemäße Lage gebracht werden und zum anderen der Hauptschalter (S1) ausgeschaltet wird und daß anschließend der Hauptschalter (S1) wieder eingeschaltet wird,
**dadurch gekennzeichnet,**
daß die Mittel aus einem Relais (R) und einem von diesem betätigbaren, im unbetätigten Zustand geschlossenen Unterbrecher (U) bestehen, daß das Relais (R) einerseits in Reihe mit dem Elektromotor (7) geschaltet und andererseits durch eine zu ihm elektrisch parallel geschaltete Anordnung überbrückt ist, die ihrerseits in elektrischer Reihenschaltung mindestens einen Sicherheitsschalter (S2, S3) und den Unterbrecher (U) enthält, wobei die Impedanzen von Relais (R), Elektromotor (7) und Anordnung so aufeinander abgestimmt sind, daß bei geschlossenem Unterbrecher (U) und geschlossenen Sicherheitsschaltern (S2, S3) der Strom zur Versorgung des Elektromotors (7) praktisch ausschließlich über die Anordnung und nicht durch das Relais (R) fließt und daß bei elektrisch unterbrochener Anordnung ein derart großer Anteil der gesamten Versorgungsspannung am Relais (R) abfällt, daß dieses den Unterbrecher (U) öffnet und in seiner Offenstellung hält, daß aber die am Elektromotor (7) anliegende Spannung nicht mehr zu dessen Betrieb ausreicht.

2. Sicherheitsschaltung nach dem Oberbegriff des Anspruchs 1,
**dadurch gekennzeichnet,** daß die Mittel eine elektronische Schaltstufe (3) aufweisen, die zusammen mit mindestens einem Sicherheitsschalter (S2, S3) mit dem Elektromotor (7) elektrisch in Reihe geschaltet ist und daß die Schaltstufe (3) einen Halbleiterschalter aufweist und eine Steuerstufe (4) vorgesehen ist, die die Schaltstufe (3) ansteuert und nach Öffnen des Sicherheitsschalters (S2, S3) das Durchschalten der Schaltstufe (3) bis zum Betätigen einer Rücksetztaste unterbindet.

3. Elektronische Sicherheitsschaltung nach Anspruch 2,
**dadurch gekennzeichnet,** daß die Schaltstufe (3) ein über positive Versorgungs-Halbwellen betriebener Halbleiterschalter ist.

4. Elektronische Sicherheitsschaltung nach Anspruch 3,
**dadurch gekennzeichnet,** daß der Halbleiterschalter ein Thyristor (8) ist, dem ein Kondensator (C4) parallel geschaltet ist.

5. Elektronische Sicherheitsschaltung nach Anspruch 4,
**dadurch gekennzeichnet,** daß die Steuerstufe (4) aus einem Schalttransistor (9) und einem im Basiszweig angeordneten ersten Zeitglied (10) besteht, welches den Schalttransistor (9) gegenüber dem Thyristor (8) zeitlich verzögert durchschaltet.

6. Elektronische Sicherheitsschaltung nach Anspruch 5,
**dadurch gekennzeichnet,** daß an dem Steueranschluß des Thyristors (8) ein Kondensator (C3) angeschlossen ist.

7. Elektronische Sicherheitsschaltung nach Anspruch 6,
**dadurch gekennzeichnet,** daß der Steueranschluß des Thyristors (8) mit dem Kollektor des Schalttransistors (9) verbunden ist.

8. Elektronische Sicherheitsschaltung nach Anspruch 7,
**dadurch gekennzeichnet,** daß der Kondensator (C3) zusammen mit dem Kollektorwiderstand (R5) des schalttransistors (9) ein zweites Zeitglied (11) bildet, das gegenüber dem ersten Zeitglied (10) eine kleinere Zeitkonstante aufweist.

9. Elektronische Sicherheitsschaltung nach Anspruch 8,
**dadurch gekennzeichnet,** daß die Zeitkonstante des ersten Zeitgliedes (10) vorzugsweise etwa dreimal größer ist als die des zweiten Zeitgliedes (11).

10. Elektronische Sicherheitsschaltung nach Anspruch 9,
**dadurch gekennzeichnet,** daß die Zeitkonstante des ersten Zeitgliedes (10) vorzugsweise etwa 150 ms beträgt.

11. Elektronische Sicherheitsschaltung nach Anspruch 10,
**dadurch gekennzeichnet,** daß das erste Zeitglied (10) mit einem Entladekreis (12) im Basiszweig des Schalttransistors (9) verbunden ist.

12. Elektronische Sicherheitsschaltung nach Anspruch 11,
**dadurch gekennzeichnet,** daß der Entladekreis (12) aus einem ersten Widerstand (R3), der das erste Zeitglied (10) mit der Basis des Schalttransistors (9) verbindet, und einem zweiten Widerstand (R4) besteht, der zwischen Basis und Emitter des Schalttransistors (9) liegt.

13. Elektronische Sicherheitsschaltung nach Anspruch 12,
**dadurch gekennzeichnet,** daß der erste Widerstand (R3) etwa 15 k Ω und der zweite Widerstand (R4) etwa 10 k Ω aufweist.

14. Elektronische Sicherheitsschaltung nach Anspruch 2,
**dadurch gekennzeichnet,** daß die Rücksetztaste der Hauptschalter (S1) ist.

## Claims

1. A safety circuit for a kitchen appliance powered by an electric motor (7) and comprised of several components releasably attached to each other, the kitchen appliance including, in addition to a main switch (S1) for powering it up, one or several safety switches (S2, S3) electrically connected in series which enable the electric motor (7) to be connected to its voltage supply and to be accordingly in operation with the main switch (S1) closed only when all of the components are in their proper positions ensuring the user's safety, with electrically or electronically actuated means (R, 8) being provided which ensure that when the voltage supply (U2) of the electric motor (7) in operating condition is interrupted upon removing one of the components of the domestic appliance from its proper position, a restart of the electric motor (7) can be effected only by the user first replacing all components of the kitchen appliance to their proper positions for one thing, and by the main switch (S1) being turned off for another thing, and by the main switch (S1) being turned on again subsequently,
**characterized in that** the means comprise a relay (R) and an interrupter (U) actuatable by the relay and closed in the inactivated condition, that the relay (R) is connected in series with the electric motor (7) in addition to being bypassed by an arrangement electrically connected thereto in parallel, which arrangement is a series circuit comprising at least one safety switch (S2, S3) and the interrupter (U), with the impedances of the relay (R), the electric motor (7) and the arrangement being relatively matched such that with the interrupter (U) closed and the safety switches (S2, S3) closed, the current supply to the electric motor (7), rather than being through the relay (R), is practically exclusively through the arrangement, and that with the arrangement electrically interrupted, such a large portion of the full supply voltage drops across the relay (R) that the relay opens the interrupter (U), maintaining it in its open position, while yet the voltage residing at the electric motor (7) is no longer sufficient for operation of the motor.

2. The safety circuit according to the prior-art portion of claim 1,
**characterized in that** the means comprise an electronic switching stage (3) which, in conjunction with at least one safety switch (S2, S3), is electrically connected in series with the electric motor (7), that the switching stage (3) includes a semiconductor switch, and that a control stage (4) is provided which drives the switching stage (3) and, following opening of the safety switch (S2, S3), inhibits conduction of the switching stage (3) until a reset button is actuated.

3. The electronic safety circuit as claimed in claim 2,
**characterized in that** the switching stage (3) is a semiconductor switch operated by positive supply half-waves.

4. The electronic safety circuit as claimed in claim 3,
**characterized in that** the semiconductor switch is a thyristor (8) having a capacitor (C4) connected in parallel thereto.

5. The electronic safety circuit as claimed in claim 4,
**characterized in that** the control stage (4) is comprised of a switching transistor (9) and a first timing element (10) arranged in the base branch, which timing element renders the switching transistor (9) conducting with a time delay relative to the thyristor (8).

6. The electronic safety circuit as claimed in claim 5,
**characterized in that** a capacitor (C3) is connected to the gate terminal of the thyristor (8).

7. The electronic safety circuit as claimed in claim 6,
**characterized in that** the gate terminal of the thyristor (8) is connected to the collector of the switching transistor (9).

8. The electronic safety circuit as claimed in claim 7,
**characterized in that** the capacitor (C3), in conjunction with the collector resistor (R5) of the switching transistor (9), forms a second timing element (11) having a time constant smaller than that of the first timing element (10).

9. The electronic safety circuit as claimed in claim 8,
**characterized in that** the time constant of the first timing element (10) is preferably three times as large as that of the second timing element (11).

10. The electronic safety circuit as claimed in claim 9,
**characterized in that** the time constant of the first timing element (10) is preferably 150 ms, approximately.

11. The electronic safety circuit as claimed in claim 10,
**characterized in that** the first timing element (10) is connected to a discharge circuit (12) in the base branch of the switching transistor (9).

12. The electronic safety circuit as claimed in claim 11,
**characterized in that** the discharge circuit (12) is comprised of a first resistor (R3) connecting the first timing element (10) to the base of the switching transistor (9), and of a second resistor (R4) inserted between the base and the emitter of the switching transistor (9).

13. The electronic safety circuit as claimed in claim 12,
**characterized in that** the first resistor (R3) has a resistance value of about 15K ohms, and the second resistor (R4) has a resistance value of about 10K ohms.

14. The electronic safety circuit as claimed in claim 2,
**characterized in that** the reset button is the main switch (S1).

## Revendications

1. Circuit de sécurité pour un appareil électroménager constitué de plusieurs composants reliés l'un à l'autre de façon amovible et entraîné par un moteur électrique (7) qui, en plus d'un interrupteur principal S1 pour sa mise en route, présente un ou plusieurs interrupteurs de sécurité (S2, S3) montés électriquement en série qui ne permettent que si tous les composants se trouvent à leur place réglementaire, garantissant la sécurité de l'utilisateur, que le moteur électrique (7), l'interrupteur principal (S1) étant fermé, accède à sa tension d'alimentation et puisse donc être utilisé, circuit dans lequel il existe des moyens (R, 8), manoeuvrés par voie électrique ou électronique, qui font en sorte que, si, le moteur électrique (7) étant en marche en soi, sa tension d'alimentation (U2) est interrompue après que l'un des composants de l'appareil électroménager ait quitté sa place réglementaire, il n'est possible de faire démarrer à nouveau le moteur électrique (7) que par le moyen que d'une part tous les composants de l'appareil ménager sont à nouveau mis à leur place réglementaire par l'utilisateur et que d'autre part l'utilisateur ouvre l'interrupteur principal (S1) puis ensuite le ferme à nouveau,
caractérisé par le fait que les moyens sont constitués d'un relais (R) et d'un coupe-circuit (U) manoeuvré par ce relais et fermé à l'état inactif, que le relais (R) est d'une part monté en série avec le moteur électrique (7) et d'autre part shunté par un dispositif qui est monté électriquement en parallèle avec lui et qui, de son côté, contient, dans un circuit de série électrique au moins un interrupteur de sécurité (S2, S3) et le coupe-circuit (U), les impédances du relais (R), du moteur électrique (7) et du dispositif étant accordées l'une sur l'autre de façon que, le coupe-circuit (U) étant fermé et les interrupteurs de sécurité (S2, S3) étant fermés, le courant d'alimentation du moteur électrique (7) passe pratiquement exclusivement par le dispositif et non par le relais (R) et que, le dispositif faisant l'objet d'une coupure électrique, une proportion suffisamment importante de la tension d'alimentation totale arrive au relais (R) pour que celui-ci ouvre le coupe-circuit (U) et le maintienne dans sa position d'ouverture, mais que la tension arrivant au moteur électrique (7) ne suffise plus pour qu'il puisse marcher.

2. Circuit de sécurité selon le préambule de la revendication 1,
caractérisé par le fait que les moyens présentent un étage de commutation électronique (3) qui, en même temps qu'au moins un interrupteur de sécurité (S2, S3), est monté électriquement en série avec le moteur électrique (7) et que l'étage de commutation (3) présente un interrupteur à semiconducteur et qu'est prévu un étage de commande (4) qui commande l'étage de commutation (3) et, après ouverture de l'interrupteur de sécurité (2, 3), interdit le passage du courant par l'étage de commutation (3) jusqu'à ce que l'on manoeuvre une touche de réinitialisation.

3. Circuit de sécurité selon le préambule de la revendication 2,
caractérisé par le fait que l'étage de commutation (3) est un interrupteur à semiconducteur entraîné par des demi-ondes d'alimentation positives.

4. Circuit de sécurité selon le préambule de la revendication 3,
caractérisé par le fait que l'interrupteur à semiconducteur est un thyristor (8) parallèlement auquel est monté un condensateur (C4).

5. Circuit de sécurité selon le préambule de la revendication 4,
caractérisé par le fait que l'étage de commande (4) est constitué d'un transistor de commutation (9) et d'un premier élément de temporisation (10) qui est disposé dans la branche de la base et qui rend conducteur le transistor de commutation (9) avec un retard dans le temps par rapport au thyristor (8).

6. Circuit de sécurité selon le préambule de la revendication 5,
caractérisé par le fait qu'un condensateur (C3) est relié à la borne de commande du thyristor (8).

7. Circuit de sécurité électronique selon la revendication 6,
caractérisé par le fait que la borne de commande du thyristor (8) est reliée au collecteur du transistor de commutation (9).

8. Circuit de sécurité selon le préambule de la revendication 7,
caractérisé par le fait qu'avec la résistance (R5) de collecteur du transistor de commutation (9), le condensateur (C3) forme un second élément de temporisation (11) qui présente une constante de temps inférieure à celle du premier élément de temporisation (10).

9. Circuit de sécurité selon le préambule de la revendication 8,
caractérisé par le fait que la constante de temps du premier élément de temporisation (10) est de préférence à peu près trois fois plus grande que celle du second élément de temporisation (11).

10. Circuit de sécurité selon le préambule de la revendication 9,
caractérisé par le fait que la constante de temps du premier élément de temporisation (10) vaut de préférence environ 150 ms.

11. Circuit de sécurité selon le préambule de la revendication 10,
caractérisé par le fait que le premier élément de temporisation (10) est relié au circuit de décharge (12) placé dans la branche de base du transistor de commutation (9).

12. Circuit de sécurité selon le préambule de la revendication 1,1
caractérisé par le fait que le circuit de décharge (12) est constitué d'une première résistance (R3) qui relie le premier élément de temporisation (10) à la base du transistor de commutation (9) et d'une seconde résistance (4) qui se situe entre la base et l'émetteur du transistor de commutation (9).

13. Circuit de sécurité selon le préambule de la revendication 12,
caractérisé par le fait que la première résistance (R3) vaut environ 15 k Ω et que la seconde résistance (R4) vaut environ 10 kΩ.

14. Circuit de sécurité selon le préambule de la revendication 2,
caractérisé par le fait que la touche de réinitialisation est l'interrupteur principal (S1).
